# FASCICULE DE BREVET EUROPEEN

(11) **EP 3 825 221 B1**
(45) Date de publication et mention de la délivrance du brevet: **24.07.2024**
(21) Numéro de dépôt: 20208731.8
(22) Date de dépôt: 19.11.2020
(51) Int. Cl.: B63B 17/00, H01M 10/625

(54) **SYSTÈME DE FIXATION D'UNE PLURALITÉ DE PACKS BATTERIE DE FAÇON EMPILÉE LES UNS SUR LES AUTRES À BORD D'UN NAVIRE COMPRENANT DES VIS IMPERDABLES, BLOC D'ALIMENTATION ET PROCÉDÉ DE FIXATION ASSOCIÉS**
SYSTEM ZUR BEFESTIGUNG EINER VIELZAHL VON BATTERIEPAKETEN IN GESTAPELTER WEISE AN BORD EINES SCHIFFES, DAS UNVERLIERBARE SCHRAUBEN, EINE STROMVERSORGUNGSEINHEIT UND EIN BEFESTIGUNGSVERFAHREN DAFÜR UMFASST
FIXING SYSTEM OF A PLURALITY OF BATTERY PACKS STACKED ON EACH OTHER IN A VESSEL COMPRISING CAPTIVE SCREWS, ASSOCIATED ALIMENTATION BLOC AND FIXING METHOD

(30) Priorité: 19.11.2019 FR 1912870
(43) Date de publication de la demande: 26.05.2021
(73) Titulaire: Naval Group, 75015 Paris (FR)
(72) Inventeur: BODET, Ludovic, 56100 LORIENT (FR); FERAL, Hervé, 56311 LORIENT (FR); MAHE, Erwan, 56311 LORIENT (FR)
(74) Mandataire: Lavoix

(56) Documents cités:
- EP-A1- 0 390 751
- EP-A1- 1 864 863
- DE-A1- 10 054 205
- DE-A1- 102007 007 956

## Description

La présente invention concerne un système de fixation d'une pluralité de packs batterie de façon empilée les uns sur les autres à bord d'un navire. Ce système comprend notamment une pluralité de vis imperdables.

La présente invention concerne également un bloc d'alimentation et un procédé de fixation associés.

Par navire, on entend tout engin apte à naviguer sur la surface maritime (tel qu'un bateau) et éventuellement submersible (tel qu'un sous-marin).

De manière connue en soi, pour mettre en oeuvre ses différentes fonctionnalités, les navires utilisent souvent de l'énergie électrique stockée dans des batteries embarquées.

Ces batteries se présentant généralement sous la forme de packs d'accumulateurs, appelés également packs batterie, doivent être adaptées au fonctionnement dans un environnement très instable, présentant parfois des chocs importants.

Cet environnement peut également subir des dilations importantes liées à des conditions thermiques variables.

Ainsi, pour assurer une bonne fixation des packs batterie dans un tel environnement, il est connu d'installer ces packs dans un local spécial adapté à cet effet.

En particulier, il est connu d'utiliser des crochets sur le fond des packs batterie permettant de les accrocher au plancher du local et ainsi, de les bloquer verticalement.

D'autres système de fixation sont par exemple décrit dans EP 1 864 863 A1, DE 10 2007 007956 A1, EP 0 390 751 A1 et DE 100 54 205 A1.

Pour assurer un blocage horizontal, il est connu d'utiliser des calles, coins, tasseaux, etc. entre différents packs batterie ou alors entre ces packs batterie et les murs du local.

On conçoit alors que cela impose de nombreuses contraintes d'installation de ces packs batterie. Ces contraintes imposent par exemple l'installation des packs batterie en une seule couche ce qui conduit, bien entendu, à des pertes d'espace importantes.

La présente invention a pour but de remédier à ces inconvénients et de proposer un système de fixation permettant d'installer des packs batterie de façon empilée les uns sur les autres et cela dans un environnement très instable.

À cet effet, l'invention a pour objet un système de fixation d'une pluralité de packs batterie selon la revendication 1.

Suivant d'autres aspects avantageux de l'invention, le système est selon l'lune des revendications 2 à 8.

La présente invention a également pour objet un procédé de fixation d'une pluralité de packs batterie selon la revendication 9.

La présente invention a également pour objet un bloc d'alimentation d'un navire selon la revendication 10.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique en perspective d'une coque d'un navire en coupe transversale, la coque définissant un local batterie ;
- [Fig 2] la figure 2 est une vue schématique en perspective d'un pack batterie destiné à être installé dans le local batterie de la figure 1 au moyen d'un système de fixation selon l'invention ;
- [Fig 3] la figure 3 est une vue schématique en perspective éclatée d'un renfort, d'une vis imperdable, d'une douille taraudée et d'un ressort faisant partie du système de fixation selon l'invention ;
- [Fig 4] la figure 4 est une vue schématique en perspective de la vis imperdable de la figure 3 dans une position non-fixée (à gauche) et dans une position fixée (à droite) ;
- [Fig 5] la figure 5 est une vue schématique en perspective d'une butée de fond faisant partie du système de fixation selon l'invention ;
- [Fig 6] la figure 6 est une vue schématique en perspective d'un tendeur d'arrimage faisant partie du système de fixation selon l'invention ;
- [Fig 7] la figure 7 est une vue schématique en perspective des packs batterie installés dans le local batterie de la figure 1 au moyen du système de fixation selon l'invention ; et
- [Fig 8] la figure 8 est vue schématique d'un bloc d'alimentation selon l'invention, le bloc d'alimentation comprenant une pluralité de packs batterie de la figure 2 et le système de fixation selon l'invention permettant de fixer ces packs batterie dans le local batterie de la figure 1.

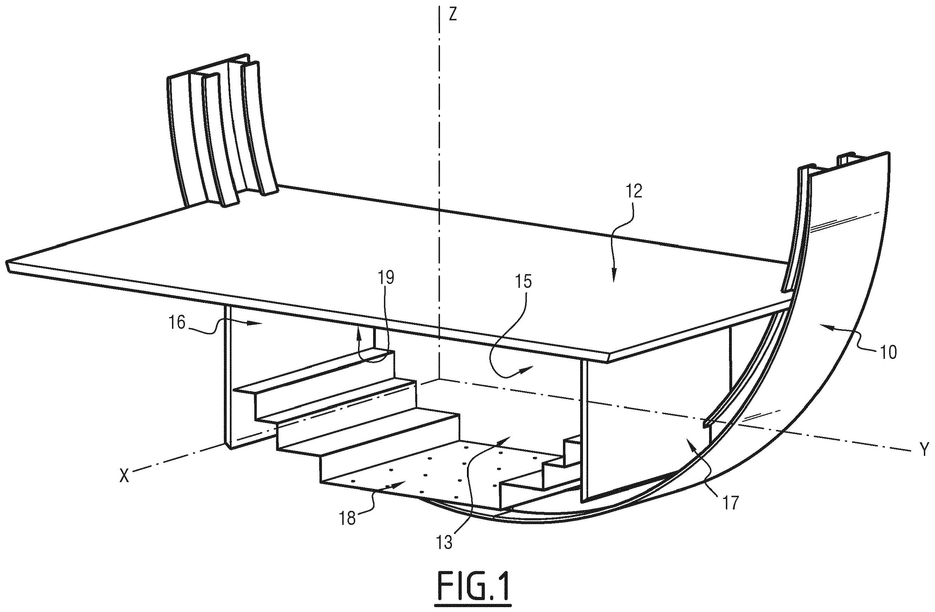

On a en effet représenté sur la figure 1 une coque 10 d'un navire.

Par navire, il est entendu tout engin se déplaçant sur la surface maritime tel qu'un bateau ou un engin submersible tel qu'un sous-marin.

La coque 10 présente une forme étendue selon un axe central. Cet axe sera dénoté par la suite comme axe X.

L'axe X est perpendiculaire à un axe transversal qui sera alors dénoté par la suite comme axe Y.

Dans l'exemple de la figure 1, la coque 10 présente une forme générale cylindrique dont seulement la partie basse est visible sur la figure 1. Cette partie basse présente une forme arrondie définissant notamment un arc de cercle dans chaque coupe transversale.

Bien entendu, dans un cas général, la coque 10 peut présenter toute autre forme connue d'un navire.

La figure 1 fait par ailleurs apparaître une paroi 12 s'étendant transversalement par rapport à la coque 10 dans un plan formé par les axes X et Y.

Cette paroi 12 délimite un local batterie 13 disposé dans la partie basse de la coque 12.

La longueur du local 13 s'étend selon l'axe X entre deux murs dont seulement un est visible sur la figure 1. Ce mur sera appelé par la suite mur de fond 15.

La largeur du local 13 s'étend selon l'axe Y et est délimitée par deux murs latéraux 16 et 17.

Enfin, la hauteur du local 13 s'étend selon un axe Z perpendiculaire aux axes X et Y, entre un plancher 18 et un plafond 19.

Le mur de fond 15 est par exemple sensiblement plat.

Le plafond 19 est également par exemple sensiblement plat et est formé par une partie de la paroi 12 disposée en regard du local batterie 13.

Quant aux murs latéraux 16, 17 et le plancher 18, ceux-ci présentent des surfaces cascadées selon la forme arrondie de la coque 10 en formant ainsi des marches.

En particulier, comme cela est visible sur la figure 1, chacun des murs latéraux 16, 17 présente une portion plate adjacente au plafond 19 et une portion cascadée adjacente au plancher 18.

La portion cascadée de chacun des murs latéraux 16, 17 présente ainsi une pluralité de surfaces plates s'étendant selon l'axe X et écartées les unes par rapport aux autres selon l'axe Y. Ces surfaces plates forment alors des parties verticales des marches ou des contremarches.

De manière analogue, le plancher 18 présente une portion plate et une portion cascadée.

La portion cascadée est également constituée d'une pluralité de surfaces plates qui s'étendent dans ce cas selon l'axe X et sont écartées les unes par rapport aux autres selon l'axe Z. Ces surfaces plates forment alors des parties horizontales des marches.

Sur la figure 1, les murs latéraux 16, 17 et le plancher 18 définissent trois marches de côté de chaque mur latéral 16, 17.

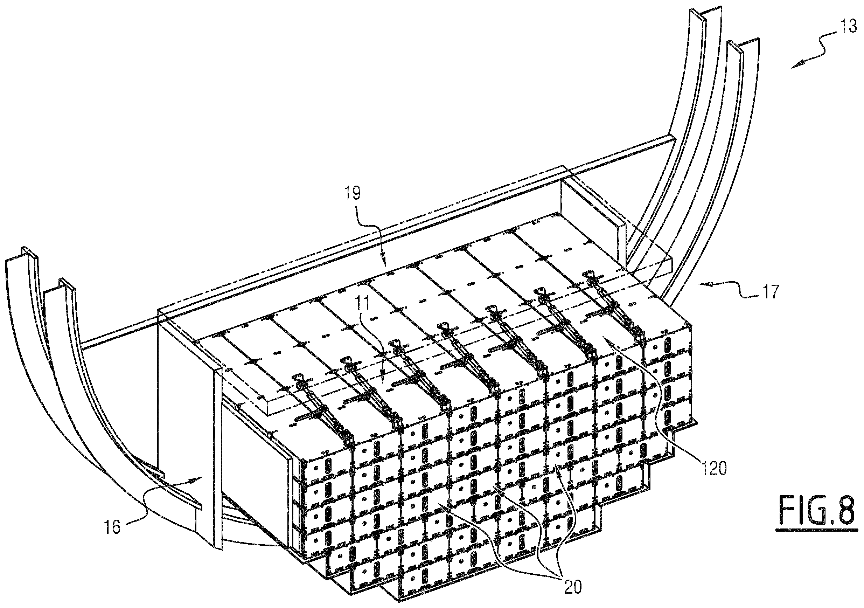

Le local batterie 13 est adapté pour recevoir un bloc d'alimentation 11 selon l'invention. Ce bloc d'alimentation dans l'état assemblé est visible sur la figure 8 et comprend notamment une pluralité de packs batterie 20.

Ces packs batterie 20 sont par exemple sensiblement analogues entre eux.

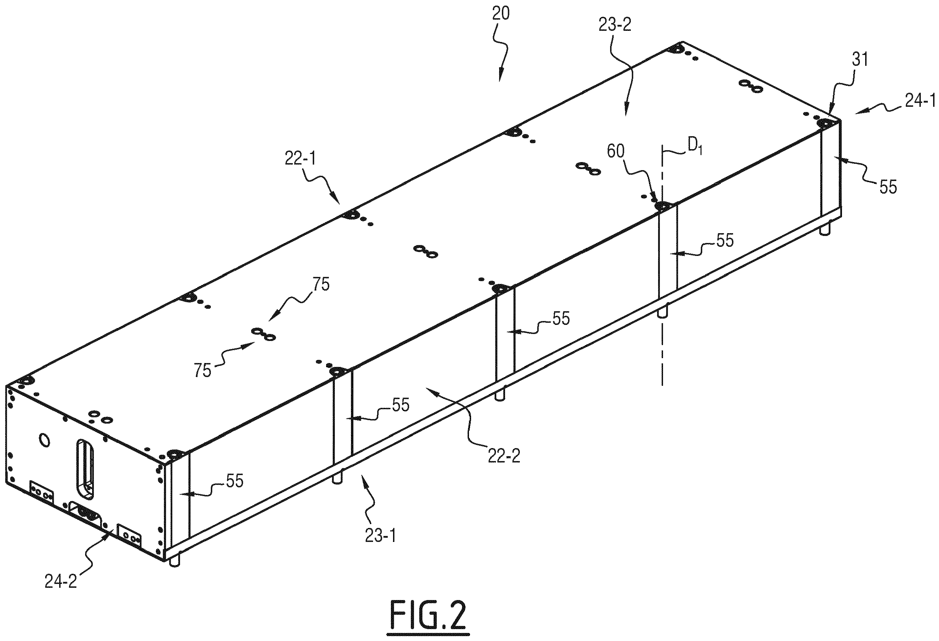

L'un de ces packs 20 est illustré sur la figure 2.

En particulier, comme cela est visible sur cette figure 2, le pack batterie 20 présente une forme sensiblement parallélépipédique.

Autrement dit, le pack batterie 20 définit deux parois latérales désignées sur la figure 2 sous les références 22-1 et 22-2.

Le pack batterie 20 définit en outre une paroi inférieure 23-1 et une paroi supérieure 23-2 ainsi qu'une paroi proximale 24-1 et une paroi distale 24-2.

Les packs batterie 20 sont destinés à être posés dans le local batterie 13 de manière empilée les uns sur les autres.

Ainsi, les packs batterie 20 définissent une pluralité de couches et une pluralité de rangées.

Chacune des couches s'étend dans un plan défini par les axes X et Y entre les murs latéraux 16, 17.

Chacune des rangées s'étend entre le plancher 18 et la plafond 19.

Au sein d'une même rangée, les packs batterie 20 peuvent être alignés selon l'axe Z ou alors peuvent être posés en quinconce, comme cela sera expliqué par la suite.

Ainsi, la paroi inférieure 23-1 de chacun des packs batterie 20 est destinée à être posée sur le plancher 18 ou sur la paroi supérieure 23-2 d'un ou de deux pack(s) batterie d'une couche de packs batterie inférieure.

De la même façon, la paroi supérieure 23-2 de chaque pack batterie 20 est destinée à servir de base de fixation pour une couche de packs batterie supérieure ou alors de bloquer l'ensemble de packs batterie contre le plafond 19.

Par ailleurs, compte tenu des marches formées par les murs 16, 17 et le plancher 18, le nombre de packs batterie 20 dans les couches est variable.

Ce nombre augmente par exemple avec chaque couche jusqu'à devenir constant à partir d'une certaine couche.

Ainsi, par exemple, lorsque les packs batterie sont posés en sept couches, les quatre premières couches comportent un nombre croissant de packs batterie 20 et les trois dernières couches comportent le même nombre de packs batterie 20 que la quatrième couche.

En revenant à la description de la figure 2, la paroi distale 24-2 du pack batterie 20 est destinée à être posée contre le mur de fond 15 du local batterie 13.

La paroi proximale 24-1 est destinée à être libre dans le local batterie 13. En particulier, cette paroi 24-1 permet à l'opérateur faisant le montage et la maintenance de l'ensemble des packs batterie de fixer chaque pack batterie 20, comme cela sera expliqué par la suite.

Chacune des parois latérales 22-1, 22-2 est destinée à entrer en contact soit avec une paroi latérale d'un pack batterie 20 adjacent de la même couche, soit avec l'un des murs latéraux 16, 17.

Pour ce faire, chacune des parois latérales 22-1, 22-2 définit une pluralité de rainures 31 de fixation.

Ainsi, comme cela est visible sur la figure 2, chaque rainure 31 s'étend entre la paroi inférieure 23-1 et la paroi supérieure 23-2 du pack batterie 20 de manière perpendiculaire à ces parois.

Dans une coupe transversale, chaque rainure 31 présente par exemple un demi-carré comprenant alors une paroi de fond et deux parois latérales.

Dans l'exemple représenté sur la figure 2, cinq rainures 31 sensiblement identiques sont formées sur chaque paroi latérale 22-1, 22-2 du pack batterie 20.

Par ailleurs, dans le même exemple, une rainure 31 sur chacune des parois latérales 22-1, 22-2 est adjacente à la paroi distale 24-2 et une autre rainure 31 est adjacente à la paroi proximale 24-1.

Autrement dit, dans cet exemple, le pack batterie 20 définit deux rainures 31 adjacentes à la paroi proximale 24-1 et deux rainures 31 adjacentes à la paroi distale 24-2.

Les rainures 31 appartenant aux parois latérales 22-1, 22-2 de packs batterie différents sont disposées en regard les unes par rapport aux autres lorsque ces packs batterie se trouve dans une position fixée.

La fixation des packs batterie 20 en une pluralité de couches s'effectue au moyen d'un système de fixation selon l'invention faisant également partie du bloc d'alimentation 11 selon l'invention.

Un tel système de fixation sera désormais expliqué en référence aux figures 2 à 8.

Le système fixation selon l'invention comprend une pluralité de renforts 55, une pluralité de vis imperdables 57, au moins une butée de fond 58 et une pluralité de tendeurs d'arrimage 59.

Les renforts 55 sont destinés à être montés dans les rainures 31 des packs batteries 20.

Ces renforts 55 sont par exemple tous analogues entre eux.

Ainsi, par la suite, seul un renfort 55 sera expliqué en détail en référence à la figure 2.

En particulier, comme cela est visible sur la figure 2, le renfort 55 définit une forme complémentaire à celle de la rainure 31 dans laquelle il est destiné à être monté.

Ainsi, tout comme cette rainure 31, le renfort 55 s'étend selon un axe de renfort D1.

Cet axe de renfort D1 est destiné à s'étendre le long de la rainure 31 lorsque le renfort 55 est inséré dans cette rainure 31 comme cela est visible sur la figure 2.

En outre, la forme du renfort 55 est adapté de sorte que lorsque celui-ci est inséré dans la rainure 31 correspondante, il ne fasse pas saillie par rapport à la paroi latérale correspondante 22-1, 22-2 du pack batterie 20 correspondant.

Ainsi, autrement dit, le renfort 55 présente une paroi plate qui est lorsque le renfort 55 est inséré dans la rainure 31 forme une surface plate avec la paroi latérale 22-1, 22-2 correspondante.

Le renfort 55 présente un orifice traversant 60 s'étendant selon l'axe de renfort D1 d'une extrémité supérieure jusqu'une extrémité inférieure. Comme cela sera expliqué par la suite, l'extrémité supérieure de l'orifice traversant 60 présente un diamètre supérieur à celui de l'extrémité inférieure.

Lorsque le renfort 55 est inséré dans la rainure 31 correspondante, l'extrémité supérieure de celui-ci débouche sur la paroi supérieure 23-2 du pack batterie 20 correspondant et l'extrémité inférieure de celui-ci débouche sur la paroi inférieure 23-1 de ce pack batterie 20.

Ainsi, l'étendue selon l'axe de renfort D1 du renfort 55 présente une valeur sensiblement égale à la hauteur de la paroi latérale 22-1, 22-2 correspondante.

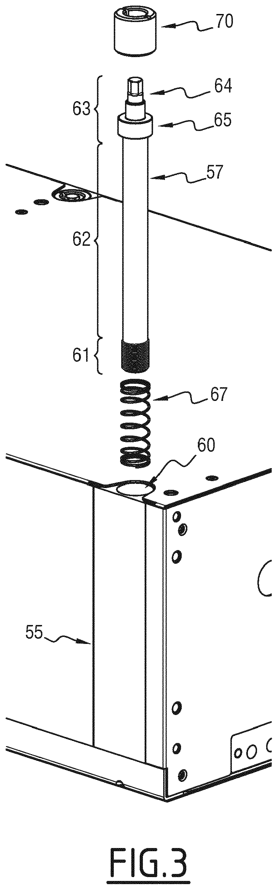

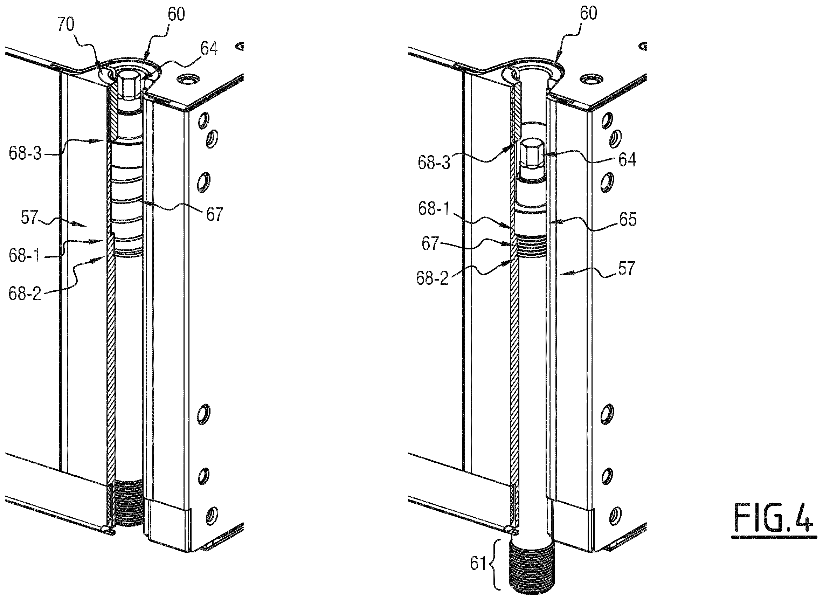

Le renfort 55 est adapté pour recevoir une vis imperdable 57 comme cela est illustré sur les figure 3 et 4.

Plus généralement, l'ensemble des renforts 55 sont adaptés pour recevoir les vis imperdables 57 qui sont par exemple toutes sensiblement analogues entre elles.

Ainsi, par la suite, seule une vis imperdable 57 sera expliquée en référence à ces figures 3 et 4.

En particulier, comme cela est visible sur la figure 3, la vis imperdable 57 définit une partie inférieure filetée 61, une partie intermédiaire cylindrique 62 et une partie supérieure de serrage 63.

La partie intermédiaire cylindrique 62 présente par exemple une tige cylindrique et est de diamètre sensiblement inférieur à celui de l'extrémité inférieure de l'orifice traversant 60 correspondant.

Ainsi, la partie intermédiaire 62 est apte à glisser librement le long de l'orifice traversant 60 correspondant.

La partie intérieure 61 présente un filetage qui est apte à coopérer avec un trou taraudé tel qu'expliqué en détail par la suite.

La partie supérieure de serrage 63 définit une tête de serrage 64 et une partie épaulée 65.

La tête de serrage 64 présente une étendue transversale inférieure au diamètre de la partie cylindrique 62.

En particulier, la tête de serrage 64 présente par exemple une forme hexagonale adaptée pour être vissée par une clé dynamométrique connue en soi.

La partie épaulée 65 fait saillie par rapport à la tête de serrage 64 et par rapport à la partie intermédiaire cylindrique 62.

En particulier, cette partie épaulée 65 présente par exemple une forme cylindrique de diamètre supérieur à celui de la partie intermédiaire cylindrique 62 mais inférieur au diamètre intérieur de l'extrémité supérieure de l'orifice traversant 60.

Lors de l'insertion de la vis imperdable 57 de l'orifice traversant 60 via l'extrémité supérieure de cet orifice, la partie épaulée 65 est apte à glisser librement le long de cette orifice 60 jusqu'à venir en butée contre une première butée interne 68-1 formée dans cet orifice.

Pour pouvoir visser les vis imperdables 57 plus aisément et pour pouvoir les extraire des orifices 60 correspondants, le système de fixation selon l'invention comprend en outre des ressorts 67 configurés pour être insérés sur les parties intermédiaires cylindriques 62 des vis 57.

Ces ressorts 67 sont par exemple sensiblement identiques, l'un d'entre eux étant invisible sur les figures 3 et 4.

En particulier comme cela est visible sur ces figures, le ressort 67 est de forme cylindrique et est apte à glisser librement le long de la partie inférieure filetée 61 et de la partie intermédiaire cylindrique 62 jusqu'à venir en butée contre la partie épaulée 65 de la vis imperdable 57 illustrée sur ces figures.

Par ailleurs, ce ressort est également adapté pour venir en butée contre une deuxième butée 68-2 formée dans l'orifice 60 comme cela est visible sur la figure 4.

Le ressort 67 est par exemple une vise de compression.

Ainsi, lorsqu'il est inséré sur la partie intermédiaire cylindrique 62 de la vise 57, il est apte à venir en butée contre la partie épaulée 65 et lorsque la vis 57 est insérée dans l'orifice 60, ce ressort 67 est apte à venir en butée contre la deuxième butée 68-2 formée dans cet orifice 60.

Cela est notamment visible sur la partie gauche de la figure 4 dans laquelle la vis 57 avec le ressort 67 sont insérés dans l'orifice 60 sans être fixés par la partie filetée 61.

En particulier, dans cette position non-fixée, le ressort 67 est apte à s'opposer à la traversée de l'orifice traversant 60 par la vis imperdable 57 de sorte que la vis 57 soit cachée entièrement dans l'orifice 60, sans faire saillie par rapport aux extrémités de cet orifice traversant.

En revanche, dans la position fixée illustrée sur la partie droite de la figure 4, c'est-à-dire, lorsque la partie filetée 61 est engagée dans un trou taraudé, le ressort 67 est adapté pour être comprimé lors du vissage de la tige 57 dans ce trou taraudé.

Dans la position fixée, la vis imperdable 57 est vissée jusqu'à ce que la partie épaulée 65 viennent en butée contre la première butée 68-1 en comprimant ainsi le ressort 67 entres les butées 68-1 et 68-2.

La distance entre les butée 68-1 et 68-2 est donc adaptée pour permettre une compression du ressort 67.

Pour fixer chaque couche supérieure de packs batterie 20, les vis imperdables 57 sont vissées dans des trous taraudés qui sont formés soit dans un pack batterie 20 se trouvant directement au-dessous du pack batterie 20 correspondant, soit dans le plancher 18 en fonction de la position du pack 20 de cette couche supérieure.

Pour former au moins certains de ces trous taraudés, le système de fixation selon l'invention comprend en outre une pluralité de douilles taraudées 70 visibles également sur les figures 3 et 4.

Ces douilles 70 sont destinées à former des trous taraudés dans les orifices 60 au-dessus des vis imperdables 57.

En particulier, ces douilles 70 présentent toutes la même forme et les mêmes dimensions. Ainsi par la suite, une seule douille taraudée 70 sera expliquée en détail en référence aux figures 3 et 4.

Comme cela est visible sur ces figures, la douille taraudée 70 présente un diamètre extérieur légèrement inférieur à celui de l'extrémité supérieure de l'orifice traversant 60.

Ainsi, lorsque la vis imperdable 67 se trouve dans une position non fixée dans le trou traversant 60, la douille taraudée est apte à être insérée dans cet orifice traversant 60 autour de la tête de serrage 64. Cela est alors visible sur la partie gauche de la figure 4.

Pour arrêter la progression de la douille taraudée 70 le long du trou traversant 60, ce trou définit par exemple une troisième butée interne 68-3 disposée dans la une partie supérieure de cet orifice 60. Il est donc clair que la troisième butée interne 68-3 est disposée au-dessus de la première butée 68-1 et donc de la deuxième butée 68-3.

La surface intérieure de la douille 70 présente un taraudage adapté pour coopérer avec le filetage de la partie inférieure 61 d'une vise 57 lorsque celle-ci est insérée dans un orifice traversant 60 d'un pack batterie 20 disposé au-dessus du pack batterie 20 dans lequel cette douille taraudée est insérée.

Lorsque les packs batterie 20 de la couche supérieure de packs batterie sont disposés en quinconce par rapport aux packs batterie de la couche inférieure, les trous taraudés sont formés dans les parois supérieures 23-2 de ces packs batterie de la couche inférieure.

Dans ce cas, ces trous taraudés sont formés par des inserts taraudés 75 visibles sur la figure 2.

En particulier, chaque insert taraudé 75 est destiné à être disposé dans la paroi supérieure 23-2 du pack batterie 20 correspondant entre un couple de rainures 31 en regard pour former un trou à tarauder de ce pack.

De plus, dans l'exemple de réalisation de la figure 2, deux inserts taraudés 75 sont insérés dans la paroi supérieure 23-2 du pack batterie 20 chaque couple de rainures 31 en regard pour former deux trous taraudés adjacents.

Ainsi, dans l'exemple de cette figure 2, cinq paires d'inserts taraudés 75 sont insérées entre chaque couple de rainures 31 en regard.

Finalement lorsqu'un pack batterie est destiné à être disposé sur le plancher 18, les trous taraudés en regard des rainures 31 correspondantes sont alors formées sur le plancher 18 comme cela est visible sur la figure 1.

La butée de fond 58 est destinée à être montée sur le mur de fond 15 du local batterie 19 en regard de la paroi distale 24-2 d'un pack batterie 120 d'une dernière couche de packs batterie. Ce pack batterie 120 est destiné à être fixé en dernière place et sera nommé par la suite dernier pack batterie 120.

En particulier, la butée de fond 58 présente une forme adaptée pour bloquer le dernier pack batterie 120 selon l'axe Z, lorsque ce dernier pack batterie 120 est glissé au-dessous de cette butée du fond 58 selon l'axe X.

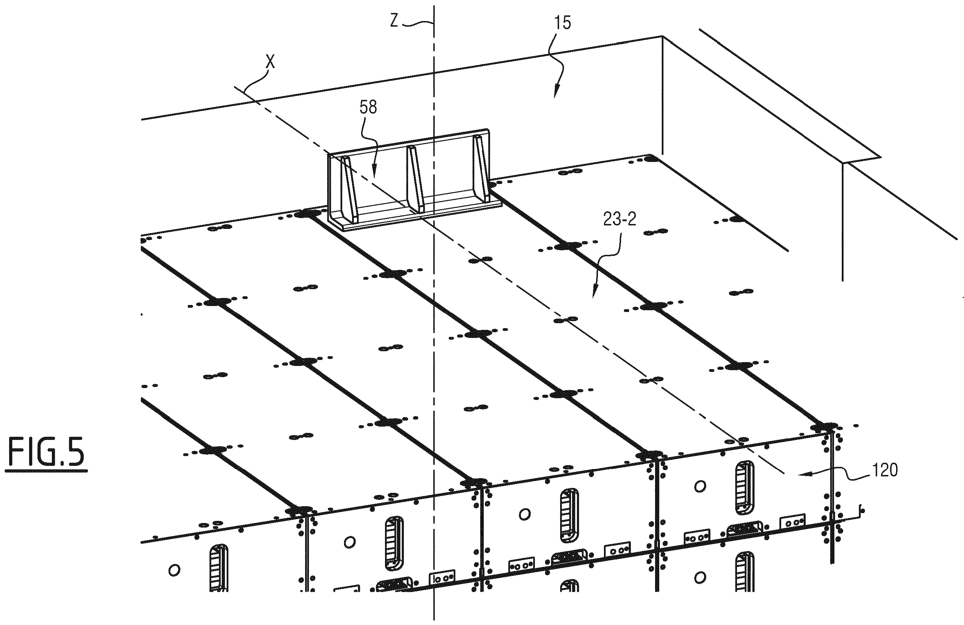

La butée de fond 58 présente ainsi par exemple la forme d'une équerre dont une paroi inférieure est apte à coopérer avec la paroi supérieure 23-2 du dernier pack batterie 120 et une paroi latérale est apte à être fixée sur le mur de fond 15 du local 13. Cela est alors visible sur la figure 5.

Les tendeurs d'arrimage 59 sont destinés à être disposés entre le plafond 19 et une dernière couche de packs batterie 20 pour bloquer cette couche notamment selon l'axe Z.

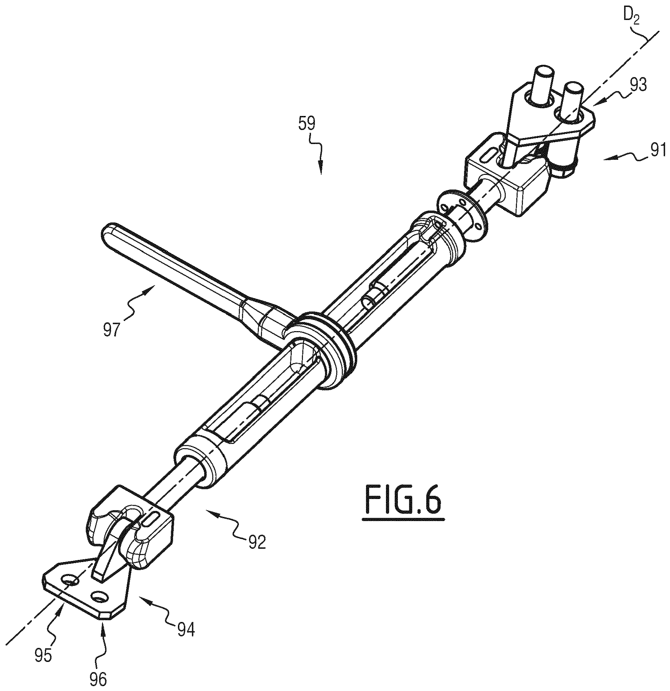

Les tendeurs d'arrimage 59 sont par exemple tous analogues entre eux, ainsi par la suite seul un tendeur d'arrimage 59 sera expliqué en détail en référence à la figure 6.

Ainsi, comme cela est visible sur la figure 6, le tendeur d'arrimage 59 définit une première extrémité 91 destinée à être fixée au plafond 19 via une première rotule 93 et une deuxième extrémité 92 destinée à être fixée à deux packs batterie adjacents de la dernière couche de packs batterie 20 via une deuxième rotule 94.

La première rotule 93 définit par exemple deux pythons destinés à être engagés dans des trous correspondants formés au plafond 19.

La deuxième rotule 94 quant à elle définit deux orifices de fixation 95 et 96 permettant de fixer cette rotule 94 au moyen de vis à deux trous taraudés.

Il est clair que chaque trou taraudé est formé sur l'un des packs batterie adjacents auxquels cette rotule 94 doit être fixée.

En particulier, les trous 95 et 96 sont destinés à être en regard des orifices traversant 60 formés dans les renforts 55 des rainures 31 des deux packs batterie adjacents 20.

Le tendeur d'arrimage 59 présente un moyen de contrôle de serrage 97 permettant alors de régler l'étendue axiale du tendeur 59 selon un axe de tendeur D2 visible sur la figure 6.

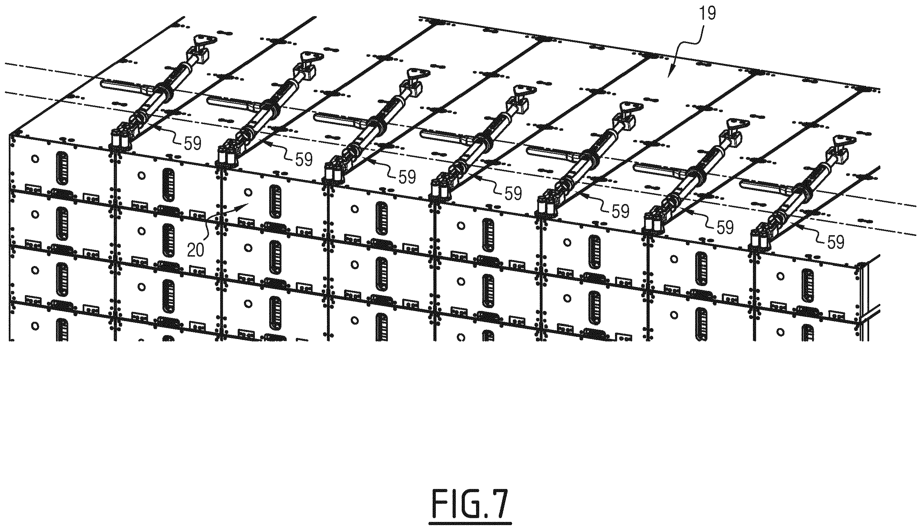

Un exemple de disposition des tendeurs d'arrimage 59 est visible sur la figure 7 sur laquelle chacun de ces tendeurs d'arrimage 59 est disposé à cheval entre deux packs batterie 20 adjacents.

Le procédé de fixation des packs batterie selon l'invention par le système de fixation selon l'invention sera désormais expliqué en référence notamment à la figure 8 illustrant le bloc d'alimentation 11 dans son état rassemblé.

Initialement, il est considéré que le plancher 18 définit des trous taraudés nécessaires pour coopérer avec les parties inférieures filetées 61 des vises imperdables 57 lorsque celles-ci sont insérées dans les renforts 55 correspondants.

Plus particulièrement, la position plate du plancher 18 définit pour chaque rainure 31 de chaque pack batterie 20 destiné à former la première couche, un trou taraudé à regard de cette rainure.

Pour former ces trous taraudés, un gabarit prévu à cet effet peut être utilisé.

Par ailleurs, sur la portion cascadée du plancher 18, des trous taraudés sont également définis pour chacune des rainures 31 des packs batterie 20 destinés à former des couches supérieures s'étendant sur les marches formées par le plancher 18 et les murs latéraux 16, 17.

Comme dans le cas précédent, un gabarit correspondant peut être utilisé pour former ces trous sur chaque surface plate.

Il est possible également de fixer les tendeurs d'arrimage 59 au plafond 19 en utilisant les pythons saillant des premières rotules 93.

Lors d'une étape initiale du procédé, un opérateur insère les renforts 55 dans les rainures 31 de chaque pack batterie 20.

Puis, lors d'une étape suivante, l'opérateur constitue une première couche de packs batterie 20 sur le plancher 18 couvert par exemple d'une mousse parasismique.

Pour fixer cette couche de packs batterie 20, l'opérateur insère lors d'une étape suivante les vis imperdables 57 dans les orifices traversants 60 formés par les renforts 55 insérés dans les rainures 31 de ces packs batterie 20.

Puis, lors d'une étape suivante, l'opérateur visse les parties inférieures filetées dans les trous taraudés formés sur le plancher 18.

Cela fait passer alors ces vis de la position non fixée à la position fixée dans laquelle les ressorts 67 se trouvent comprimés et les parties intérieures filetées 61 sont engagées dans les trous taraudés correspondants.

Puis, lors d'une étape suivante, l'opérateur insère les douilles taraudées 70 au-dessus des vis imperdables 57 se trouvant dans la position fixée.

Puis, l'opérateur constitue les couches intermédiaires en répétant les trois dernières étapes de façon analogue.

La seule différence est la disposition des trous taraudés soit dans la partie cascadée du plancher 18, soit dans les douilles taraudées 70 insérées dans les packs batterie de la couche inférieure des packs batterie, soit dans les inserts 75 formés sur les parois supérieures 23-2 de ces packs.

Pour constituer la dernière couche de packs batterie, l'opérateur pose l'un après l'autre les packs batterie 20 en commençant par ceux qui sont adjacents aux murs latéraux 16 et 17 du local 13.

Cela est possible jusqu'au dernier pack batterie 120. Pour poser ce dernier pack batterie 120, l'opérateur glisse ce dernier pack 120 au-dessous de la butée de fond 58 selon l'axe X, par exemple fixée préalablement au mur de fond 15.

Ce dernier pack batterie 120 se trouve alors bloqué selon l'axe Z.

Pour bloquer l'ensemble des packs batterie 20 de la dernière couche de packs batterie, l'opérateur baisse les tendeurs d'arrimage 59 de sorte à fixer les deuxièmes extrémités 92 des tendeurs 59 sur les packs batterie 20 de la dernière couche.

Il est par exemple possible de baisser chacune de ces deuxièmes extrémités 92 et puis, de visser chacune des deuxièmes rotules 94 sur les deux packs batterie adjacents se trouvant au-dessous, via les trous 95 et 96.

Enfin, il est possible d'actionner le moyen de contrôle de serrage 97 pour contrôler l'effort exercé par les tendeurs 59 sur les dernières couches batteries.

On conçoit alors que la présente invention présente un certain nombre d'avantages.

En effet, l'invention permet de fixer des packs batterie en utilisant plusieurs couches dans un espace très restreint et subissant des chocs importants, tel qu'un navire.

La fixation s'effectue d'une manière simple tout en permettant de bloquer l'ensemble de packs batterie selon les trois axes X, Y et Z.

En outre, l'invention utilise principalement des vis imperdables, des renforts et des douilles de construction très simple ce qui permet de réduire le nombre d'éléments différents nécessaires pour effectuer une telle fixation.

## Revendications

1. Système de fixation d'une pluralité de packs batterie (20) de façon empilée les uns sur les autres à bord d'un navire, le navire comportant un local batterie (13) dont la longueur s'étend selon un axe X et est délimitée par un mur de fond (15), la largeur s'étend selon un axe Y et est délimitée par deux murs latéraux (16, 17) et la hauteur s'étend selon un axe Z et est délimitée par un plancher (18) et un plafond (19) ;
chaque pack batterie (20) présentant une forme sensiblement parallélépipédique définissant deux parois latérales (22-1, 22-2), une paroi proximale (24-1), une paroi distale (24-2), une paroi supérieure (23-2), et une paroi inférieure (23-1), chaque paroi latérale (22-1, 22-2) définissant une pluralité de rainures (31) ;
les packs batterie (20) étant destinés à être posés en plusieurs couches sur le plancher (18) du local batterie (13) entre ses murs latéraux (16, 17) et contre le mur de fond (15), les packs batterie (20) d'une même couche étant destinés à être posés l'un à côté de l'autre de façon adjacente par leur paroi latérale (22-1, 22-2) de sorte que les rainures (31) de ces parois latérales (22-1, 22-2) soient disposées en regard et de sorte que les parois distales (24-2) de ces packs soient adjacentes au mur de fond (15) ;
le système étant **caractérisé en ce qu'**il comprend :
- une pluralité de renforts (55), chaque renfort (55) définissant un orifice traversant (60) entre une extrémité supérieure et une extrémité inférieure, chaque renfort (55) étant configuré pour être inséré dans une rainure (31) d'un pack batterie (20) sans faire saillie par rapport à la paroi latérale (22-1, 22-2) correspondante de ce pack (20) de sorte que l'extrémité supérieure débouche sur la paroi supérieure (23-2) de ce pack (20) et l'extrémité inférieure débouche sur la paroi inférieure (23-1) de ce pack ;
- une pluralité de vis imperdables (57), chaque vis imperdable (57) définissant une partie inférieure filetée (61), une parie intermédiaire cylindrique (62) et une partie supérieure de serrage (63), et étant adaptée pour être insérée dans l'orifice traversant (60) d'un renfort (55) via l'extrémité supérieure, lorsque ce renfort (55) est inséré dans une rainure (31) d'un pack batterie (20), et dans une position fixée, pour traverser partiellement cet orifice (60) afin de fixer ce pack batterie à un pack batterie (20) d'une couche inférieure de packs de batterie ou au plancher (18) par engagement de la partie inférieure filetée (61) dans un trou taraudé formé dans ce pack batterie de la couche inférieure ou dans le plancher (18),
le système comprenant en outre une pluralité de douilles taraudées (70), chaque douille taraudée (70) étant configurée pour être insérée dans l'orifice traversant (60) d'un renfort (55) via l'extrémité supérieure, lorsque ce renfort (55) est inséré dans une rainure (31) d'un pack batterie (20) et lorsqu'une vis imperdable (57) est dans la position fixée dans cet orifice ;
au moins un trou taraudé d'un pack batterie (20) étant formé par une douille taraudée (70) insérée dans l'orifice traversant (60) d'un renfort (55) inséré dans une rainure (31) de ce pack batterie (20).

2. Système selon la revendication 1, comprenant en outre une pluralité d'inserts taraudés (75), chaque insert taraudé (75) étant destiné à être inséré dans la paroi supérieure (23-2) d'un pack batterie (20) entre un couple de rainures (31) en regard pour former un trou taraudé de ce pack batterie (20);
de préférence, un couple d'inserts taraudés (75) étant destiné à être inséré dans la paroi supérieure (23-2) d'au moins certains packs batterie (20) entre un couple de rainures (31) en regard pour former deux trous taraudés adjacents de ce pack batterie (20).

3. Système selon la revendication 1 ou 2 l'une quelconque des revendications précédentes, dans lequel la partie supérieure de serrage (63) de chaque vis imperdable (57) définit une tête de serrage (64) dont chaque étendue transversale est inférieure au diamètre de la partie intermédiaire cylindrique (62) de cette vis imperdable (57).

4. Système selon l'une quelconque des revendications précédentes, comprenant en outre une pluralité de ressorts (67), chaque ressort (67) étant destiné à être inséré sur la partie intermédiaire cylindrique (62) d'une vis imperdable (57) et dans cette position, étant configuré pour s'opposer à la traversée par cette vis (57) de l'orifice traversant (60) d'un renfort (55) lors de l'insertion de cette vis dans cet orifice (60).

5. Système selon la revendication 4, dans lequel l'orifice traversant (60) de chaque renfort (55) définit une butée (68) et dans lequel la partie supérieure de serrage (63) de chaque vis imperdable (57) définit un tronçon épaulé (65) dont au moins une étendue transversale est supérieure au diamètre de la partie intermédiaire cylindrique (62) ;
chaque ressort (67) étant apte à s'opposer à la traversée de la vis imperdable (57) sur laquelle il est inséré en venant en butée d'une part contre la butée (68) formée dans l'orifice traversant (60) correspondant et d'autre part contre le tronçon épaulé (65) de ladite vis imperdable (57).

6. Système selon l'une quelconque des revendications précédentes, comprenant en outre une butée de fond (58) destinée à être montée sur le mur de fond (15) en regard de la paroi distale (24-2) d'un pack batterie (120) d'une dernière couche de packs batterie, ledit pack batterie étant destiné à être fixé en dernière place et étant dit dernier pack batterie ;
la butée de fond (58) étant apte à bloquer le dernier pack batterie selon l'axe Z lorsque celui-ci est glissé selon l'axe X au-dessous de cette butée (58).

7. Système selon l'une quelconque des revendications précédentes, comprenant en outre une pluralité de tendeurs d'arrimage (59) destinés à être disposés entre le plafond (19) et une dernière couche de packs batterie (20) pour bloquer les packs batterie (20) selon l'axe Z.

8. Système selon la revendication 7, dans lequel chaque tendeur d'arrimage (59) comprend une première extrémité (91) destinée à être fixée au plafond (19) via une première rotule (93) et une deuxième extrémité (92) destinée à être fixée à un couple de packs batterie (20) adjacents de la dernière couche de packs batterie via une deuxième rotule (94) ;
la deuxième rotule (94) définissant deux orifices (95, 96) de fixation permettant de fixer cette rotule (94) au moyen de vis à deux trous taraudés, chaque trou taraudé étant formé sur l'un de packs batterie (20) dudit couple de packs batterie adjacents.

9. Procédé de fixation d'une pluralité de packs batterie (20) de façon empilée les uns sur les autres à bord d'un navire, mis en oeuvre au moyen du système de fixation selon l'une quelconque des revendications précédentes et comportant les étapes suivantes :
- insérer les renforts (55) dans les rainures (31) de chaque packs batterie (20) ;
- constituer une première couche de packs batterie ou une couche intermédiaire de packs batterie en posant chaque pack batterie (20) sur le plancher (18) couvert d'une mousse parasismique ou sur un pack batterie (20) d'une couche inférieure de packs batterie ou à cheval entre deux packs batterie (20) d'une couche inférieure de packs batterie ;
- insérer les vis imperdables (57) dans les orifices traversant (60) des renforts (55) insérés dans les rainures (31) des packs batterie (20) de la couche de packs batterie formée ;
- visser les parties inférieures filetées (61) des vis imperdables (57) insérées, dans des trous taraudés formés au plancher (18) ou dans les packs batterie (20) de la couche inférieure de packs batterie ;
- insérer les douilles taraudées (70) au-dessus des vis imperdables (57) fixées dans les trous taraudés correspondants ;
- constituer une dernière couche de packs batterie en posant chaque pack batterie (20) sur un pack batterie (20) d'une couche inférieure de packs batterie ou à cheval entre deux packs batterie (20) d'une couche de packs batterie inférieure ;
- bloquer la dernière couche de packs batterie contre le plafond (19).

10. Bloc d'alimentation d'un navire, le navire comportant un local batterie (13) dont la longueur s'étend selon un axe X et est délimitée par un mur de fond (15), la largeur s'étend selon un axe Y et est délimitée par deux murs latéraux (16, 17) et la hauteur s'étend selon un axe Z et est délimitée par un plancher (18) et un plafond (19) ;
le bloc d'alimentation (11) comprenant une pluralité de packs batterie (20) fixés de façon empilée les uns sur les autres ;
chaque pack batterie (20) présentant une forme sensiblement parallélépipédique définissant deux parois latérales (22-1, 22-2), une paroi proximale (24-1), une paroi distale (24-2), une paroi supérieure (23-2) et une paroi inférieure (23-1), chaque paroi latérale (22-1, 22-2) définissant une pluralité de rainures (31) ;
le bloc d'alimentation (11) étant destiné à être installé dans le local batterie (13) de sorte que les packs batterie (20) soient posés en plusieurs couches sur le plancher (18) du local batterie (13) entre ses murs latéraux (16, 17) et contre le mur de fond (15), les packs batterie (20) d'une même couche étant posés l'un à côté de l'autre de façon adjacente par l'une de leurs parois latérales (22-1, 22-2) de sorte que les rainures (31) de ces parois latérales (22-1, 22-2) soient disposées en regard et de sorte que les parois distales (24-2) de ces packs (20) soient adjacentes au mur de fond (15) ;
le bloc d'alimentation (11) étant **caractérisé en ce qu'**il comprend en outre un système de fixation selon l'une quelconque des revendications 1 à 8 pour fixer les packs batterie (20) dans le local batterie (13).

## Patentansprüche

1. System zur Befestigung einer Vielzahl von Akkus (20) übereinander an Bord eines Schiffs gestapelt, wobei das Schiff einen Batterieraum (13) umfasst, dessen Länge sich entlang einer X-Achse erstreckt und von einer Rückwand (15) begrenzt wird, wobei die Breite sich entlang einer Y-Achse erstreckt und von zwei Seitenwänden (16, 17) begrenzt ist und die Höhe sich entlang einer Z-Achse erstreckt und von einem Boden (18) und einer Decke (19) begrenzt ist;
wobei jeder Akku (20) eine im Wesentlichen parallelepipedische Form aufweist, die zwei Seitenwände (22-1, 22-2), eine proximale Wand (24-1), eine distale Wand (24-2), eine obere Wand (23-2) und eine untere Wand (23-1) definiert, wobei jede Seitenwand (22-1, 22-2) eine Vielzahl von Nuten (31) definiert;
wobei die Akkus (20) dazu bestimmt sind, in mehreren Lagen auf dem Boden (18) des Batterieraums (13) zwischen seinen Seitenwänden (16, 17) und gegen die Rückwand (15) gelegt zu werden, wobei die Akkus (20) einer gleichen Lage dazu bestimmt sind, nebeneinander an ihrer Seitenwand (22-1, 22-2) anliegend angeordnet zu sein, sodass die Nuten (31) dieser Seitenwände (22-1, 22-2) einander gegenüber und derart angeordnet sind, dass die distalen Wände (24-2) dieser Akkus an die Rückwand (15) angrenzen;
wobei das System **dadurch gekennzeichnet ist, dass** es Folgendes umfasst:
- eine Vielzahl von Verstärkungen (55), wobei jede Verstärkung (55) eine Durchgangsöffnung (60) zwischen einem oberen Ende und einem unteren Ende definiert, wobei jede Verstärkung (55) so konfiguriert ist, dass sie in eine Nut (31) eines Akkus (20) eingesetzt werden kann, ohne von der entsprechenden Seitenwand (22-1, 22-2) dieses Akkus (20) vorzustehen, so dass das obere Ende an der oberen Wand (23-2) dieses Akkus (20) mündet und das untere Ende an der unteren Wand (23-1) dieses Akkus mündet;
- eine Vielzahl von unverlierbaren Schrauben (57), wobei jede unverlierbare Schraube (57) einen unteren Gewindeabschnitt (61), einen zylindrischen Zwischenabschnitt (62) und einen oberen Klemmabschnitt (63) aufweist und dazu geeignet ist, über das obere Ende in die Durchgangsöffnung (60) einer Verstärkung (55) eingeführt zu werden, wenn diese Verstärkung (55) in eine Nut (31) eines Akkus (20) eingesetzt wird, und in einer fixierten Position, um teilweise durch diese Öffnung (60) hindurchzutreten, um diesen Akku an einem Akku (20) einer unteren Schicht oder am Boden (18) durch Eingriff des unteren Gewindeabschnitts (61) in ein Gewindeloch, das in diesem Akku der unteren Schicht oder im Boden (18) ausgebildet ist, zu befestigen,
das System ferner eine Vielzahl von Gewindebuchsen (70) umfasst, wobei jede Gewindebuchse (70) so konfiguriert ist, dass sie in die Durchgangsöffnung (60) einer Verstärkung (55) über das obere Ende eingeführt werden kann, wenn diese Verstärkung (55) in eine Nut (31) eines Akkus (20) eingesetzt ist und eine unverlierbare Schraube (57) sich in der fixierten Position in dieser Öffnung befindet;
mindestens ein Gewindeloch eines Akkus (20) durch eine Gewindebuchse (70) gebildet wird, die in die Durchgangsöffnung (60) einer Verstärkung (55) eingesetzt wird, die in eine Nut (31) dieses Akkus (20) eingesetzt wird.

2. System nach Anspruch 1, ferner umfassend eine Vielzahl von Gewindeeinsätzen (75), wobei jeder Gewindeeinsatz (75) dazu bestimmt ist, in die obere Wand (23-2) eines Akkus (20) zwischen einem Paar von einander zugewandten Nuten (31) eingesetzt werden soll, um ein Gewindeloch dieses Akkus (20) zu bilden;
vorzugsweise ein Paar von Gewindeeinsätzen (75), die dazu bestimmt sind, in die obere Wand (23-2) von mindestens einigen Akkus (20) zwischen einem Paar von einander zugewandten Nuten (31) eingesetzt zu werden, um zwei benachbarte Gewindelöcher dieses Akkus (20) zu bilden.

3. System nach Anspruch 1 oder 2 eines der vorhergehenden Ansprüche, wobei der obere Klemmabschnitt (63) jeder unverlierbaren Schraube (57) einen Klemmkopf (64) definiert, bei dem jede Quererstreckung kleiner ist als der Durchmesser des zylindrischen Zwischenbereichs (62) dieser unverlierbaren Schraube (57).

4. System nach einem der vorhergehenden Ansprüche, das außerdem eine Vielzahl von Federn (67) umfasst, wobei jede Feder (67) dazu bestimmt ist, in den zylindrischen Zwischenbereich (62) einer unverlierbaren Schraube (57) eingefügt zu werden und in dieser Position so konfiguriert ist, dass sie sich dem Durchgang dieser Schraube (57) durch die Durchgangsöffnung (60) einer Verstärkung (55) beim Einsetzen dieser Schraube in diese Öffnung (60) widersetzt.

5. System nach Anspruch 4, bei dem die Durchgangsöffnung (60) jeder Verstärkung (55) einen Anschlag (68) definiert und bei dem der obere Klemmabschnitt (63) jeder unverlierbaren Schraube (57) einen geschulterten Abschnitt (65) definiert, von dem mindestens eine Quererstreckung größer ist als der Durchmesser des zylindrischen Zwischenbereichs (62);
wobei jede Feder (67) geeignet ist, sich der Durchquerung der unverlierbaren Schraube (57), in die sie eingesetzt ist, zu widersetzen, indem sie in Anschlag einerseits gegen den in der entsprechenden Durchgangsöffnung (60) geformten Anschlag (68) kommt und andererseits gegen den geschulterten Abschnitt (65) der unverlierbaren Schraube (57).

6. System nach einem der vorhergehenden Ansprüche, ferner umfassend einen Rückanschlag (58), der dazu bestimmt ist, an der Rückwand (15) gegenüber der distalen Wand (24-2) eines Akkus (120) einer letzten Lage von Akkus montiert zu werden, wobei der Akku dazu bestimmt ist, an letzter Stelle befestigt zu werden und als letzter Akku bezeichnet zu werden;
wobei der Rückanschlag (58) geeignet ist, den letzten Akku entlang der Z-Achse zu arretieren, wenn dieser entlang der X-Achse unter diesen Anschlag (58) geschoben wird.

7. System nach einem der vorherigen Ansprüche, ferner umfassend eine Vielzahl von Spannvorrichtungen zum Verstauen (59), die dazu bestimmt sind, zwischen der Decke (19) und einer letzten Lage von Akkus (20) angeordnet zu werden, um die Akkus (20) entlang der Z-Achse zu arretieren.

8. System nach Anspruch 7, wobei jede Spannvorrichtung zum Verstauen (59) ein erstes Ende (91) aufweist, das über ein erstes Kugelgelenk (93) an der Decke (19) befestigt werden soll und ein zweites Ende (92), das dazu bestimmt ist, über ein zweites Kugelgelenk (94) an einem Paar benachbarter Akkus (20) der letzten Schicht von Akkus befestigt zu werden;
wobei das zweite Kugelgelenk (94) zwei Befestigungsöffnungen (95, 96) definiert, die es ermöglichen, dieses Kugelgelenk (94) mittels Schrauben mit zwei Gewindelöchern zu befestigen, wobei jedes Gewindeloch an einem der Akkus (20) des Paares von benachbarten Akkus ausgebildet ist.

9. Verfahren zum Befestigen einer Vielzahl von Akkus (20) auf übereinander gestapelte Weise an Bord eines Schiffs, das mittels des Befestigungssystems nach einem der vorherigen Ansprüche implementiert wird und die folgenden Schritte umfasst:
- Einsetzen der Verstärkungen (55) in die Nuten (31) jedes Akkus (20);
- Bilden einer ersten Lage von Akkus oder einer Lage von zwischenliegenden Akkus, indem jeder Akku (20) auf den mit erdbebensicherem Schaumstoff bedeckten Boden (18) oder auf einen Akku (20) einer unteren Lage von Akkus oder zwischen zwei Akkus (20) einer unteren Lage von Akkus gelegt wird;
- Einsetzen der unverlierbaren Schrauben (57) in die Durchgangslöcher (60) der Verstärkungen (55), die in die Nuten (31) der Akkus (20) der gebildeten Schicht von Akkus eingesetzt sind;
- die unteren Gewindeabschnitte (61) der eingesetzten unverlierbaren Schrauben (57) in Gewindelöcher im Boden (18) oder in den Akkus (20) der unteren Schicht der Akkus einzuschrauben;
- die Gewindebuchsen (70) über den unverlierbaren Schrauben (57) in die entsprechenden Gewindebohrungen einführen;
- Bilden einer letzten Lage von Akkus, indem jeder Akku (20) auf einen Akku (20) einer unteren Lage von Akkus oder rittlings zwischen zwei Akkus (20) einer unteren Lage von Akkus gelegt wird;
- Arretieren der letzten Lage der Akkus an der Decke (19).

10. Stromversorgungseinheit eines Schiffs, wobei das Schiff einen Batterieraum (13) umfasst, dessen Länge sich entlang einer X-Achse erstreckt und von einer Rückwand (15) begrenzt ist, dessen Breite sich entlang einer Y-Achse erstreckt und von zwei Seitenwänden (16, 17) begrenzt ist und dessen Höhe sich entlang einer Z-Achse erstreckt und von einem Boden (18) und einer Decke (19) begrenzt ist;
die Stromversorgungseinheit (11) umfassend eine Vielzahl von Akkus (20), die auf gestapelte Weise übereinander befestigt sind;
wobei jeder Akku (20) eine im Wesentlichen parallelepipedische Form aufweist, die zwei Seitenwände (22-1, 22-2), eine proximale Wand (24-1), eine distale Wand (24-2), eine obere Wand (23-2) und eine untere Wand (23-1) definiert, wobei jede Seitenwand (22-1, 22-2) eine Vielzahl von Nuten (31) definiert;
wobei die Stromversorgungseinheit (11) dazu bestimmt ist, in dem Batterieraum (13) installiert zu werden, sodass die Akkus (20) in mehreren Lagen auf dem Boden (18) des Batterieraums (13) zwischen seinen Seitenwänden (16, 17) und gegen die Rückwand (15) gelegt werden, wobei die Akkus (20) einer gleichen Lage dazu bestimmt sind, nebeneinander anliegend an eine ihrer Seitenwände (22-1, 22-2) angeordnet zu sein, sodass die Nuten (31) dieser Seitenwände (22-1, 22-2) einander gegenüber und derart angeordnet sind, dass die distalen Wände (24-2) dieser Akkus (20) an die Rückwand (15) angrenzen;
wobei die Stromversorgungseinheit (11) **dadurch gekennzeichnet ist, dass** sie ferner ein Befestigungssystem nach einem der Ansprüche 1 bis 8 umfasst, um die Akkus (20) in dem Batterieraum (13) zu befestigen.

## Claims

1. System for fastening a plurality of battery packs (20) stacked on top of one another on board a vessel, the vessel comprising a battery room (13) whose length extends along an X axis and is delimited by a back wall (15), the width extends along a Y axis and is delimited by two side walls (16, 17) and the height extends along a Z axis and is delimited by a floor (18) and a ceiling (19);
each battery pack (20) has a substantially parallelepipedal shape defining two side walls (22-1, 22-2), a proximal wall (24-1), a distal wall (24-2), an upper wall (23-2), and a bottom wall (23-1), while each side wall (22-1, 22-2) defines a plurality of grooves (31);
the battery packs (20) being designed to be placed in several layers on the floor (18) of the battery room (13) between its side walls (16, 17) and against the back wall (15), the battery packs (20) of the same layer being designed to be placed next to each other adjacent to their side walls (22-1, 22-2) so that the grooves (31) of these side walls (22-1, 22-2) face each other so that the distal walls (24-2) of these packs are adjacent to the back wall (15);
wherein the system comprises:
- a plurality of reinforcements (55), each reinforcement (55) defining a through-hole (60) between an upper end and a lower end, each reinforcement (55) being designed to be inserted into a groove (31) of a battery pack (20) without protruding from the corresponding side wall (22-1, 22-2) of this pack (20) so that the upper end opens onto the upper wall (23-2) of this pack (20) and the lower end opens onto the lower wall (23-1) of this pack;
- a plurality of captive screws (57), each captive screw (57) defining a threaded lower part (61), a cylindrical intermediate part (62) and an upper clamping part (63), and being designed to be inserted into the through-hole (60) of a reinforcement (55) via the upper end, when this reinforcement (55) is inserted into a groove (31) of a battery pack (20), and, in a fixed position, to partially pass through this hole (60) in order to secure this battery pack to a battery pack (20) of a lower layer of battery packs or to the floor (18) by engaging the lower threaded portion (61) in a tapped hole formed in this battery pack of the bottom layer or in the floor (18).,
the system further comprising a plurality of threaded sleeves (70), each threaded sleeve (70) being designed to be inserted into the through-hole (60) of a reinforcement (55) via the upper end, when this reinforcement (55) is inserted into a groove (31) of a battery pack (20) and when a captive screw (57) is in the fixed position in this hole;
wherein at least one tapped hole of a battery pack (20) being formed by a threaded sleeve (70) inserted in the through-hole (60) of a reinforcement (55) inserted in a groove (31) of this battery pack (20).

2. System according to claim 1, further comprising a plurality of threaded inserts (75), each threaded insert (75) being designed to be inserted into the top wall (23-2) of a battery pack (20) between a pair of opposite grooves (31) to form a tapped hole of this battery pack (20);
preferably, a pair of threaded inserts (75) being designed to be inserted into the upper wall (23-2) of at least some battery packs (20) between a pair of grooves (31) facing each other to form two adjacent tapped holes of this battery pack (20)

3. System according to any one of the preceding claims, in which the upper clamping part (63) of each captive screw (57) defines a clamping head (64), each transverse extent of which is less than the diameter of the cylindrical intermediate part (62) of this captive screw (57).

4. System according to any one of the preceding claims, further comprising a plurality of springs (67), each spring (67) being designed to be inserted on the cylindrical intermediate part (62) of a captive screw (57) and in this position, being designed to oppose the passing by this screw (57) of the through-hole (60) of a reinforcement (55) during the insertion of this captive screw in this hole (60).

5. System according to claim 4, wherein the through-hole (60) of each reinforcement (55) defines a stop (68) and wherein the upper clamping part (63) of each captive screw (57) defines a shouldered section (65) at least one transverse extent of which is greater than the diameter of the cylindrical intermediate part (62);
each spring (67) being able to oppose the passage of the captive screw (57) upon which it is inserted by abutting against, on the one hand, the stop (68) formed in the corresponding through-hole (60) and, on the other hand, by abutting against the shouldered section (65) of said captive screw (57).

6. System according to any one of the preceding claims, further comprising a bottom stop (58) designed to be mounted on the bottom wall (15) facing the distal wall (24-2) of a battery pack (120) of a last layer of battery packs, said battery pack being designed to be finally secured as the last battery pack;
the bottom stop (58) being able to secure the last battery pack along the Z axis when it is slid along the X axis below this stop (58).

7. System according to any one of the preceding claims, further comprising a plurality of tie-down tensioners (59) designed to be disposed between the ceiling (19) and a last layer of battery packs (20) to secure the battery packs (20) along the Z axis.

8. System according to claim 7, wherein each tie-down tensioner (59) comprises a first end (91) designed to be fixed to the ceiling (19) via a first ball joint (93) and a second end (92) designed to be attached to a pair of adjacent battery packs (20) of the last layer of battery packs via a second ball joint (94);
the second ball joint (94) defining two fastening holes (95, 96) making it possible to fix this ball joint (94) by means of screws with two tapped holes, each tapped hole being formed on one of the battery packs (20) of said pair of adjacent battery packs.

9. A method of securing a plurality of battery packs (20) stacked on top of one another on board a vessel, implemented by means of the fastening system according to any one of the preceding claims and comprising the following steps:
- insert the reinforcements (55) into the grooves (31) of each battery pack (20);
- constitute a first layer of battery packs or an intermediate layer of battery packs by placing each battery pack (20) on the floor (18) covered with an earthquake-resistant foam or on a battery pack (20) with a lower layer of battery packs or straddling two battery packs (20) of a lower layer of battery packs;
- insert the captive screws (57) into the through-holes (60) of the reinforcements (55) inserted in the grooves (31) of the battery packs (20) of the layer of battery packs so formed;
- screw the threaded lower parts (61) of the inserted captive screws (57) in tapped holes formed in the floor (18) or in the battery packs (20) of the lower layer of the battery packs;
- insert the threaded sleeves (70) above the captive screws (57) fixed in the corresponding tapped holes;
- constitute a last layer of battery packs by placing each battery pack (20) on a battery pack (20) of a lower layer of battery packs or between two battery packs (20) of a lower layer of battery packs;
- secure the last layer of battery packs against the ceiling (19).

10. Power supply unit of a vessel, the vessel comprises a battery room (13) whose length extends along an X axis and is delimited by a back wall (15), whose width extends along a Y axis and is delimited by two side walls (16, 17) and whose height extends along a Z axis and is delimited by a floor (18) and a ceiling (19);
wherein the power supply unit (11) comprises a plurality of battery packs (20) stacked on top of one another;
each battery pack (20) having a substantially parallelepipedal shape defining two side walls (22-1, 22-2), a proximal wall (24-1), a distal wall (24-2), an upper wall (23-2) and a bottom wall (23-1), each side wall (22-1, 22-2) defining a plurality of grooves (31);
the power supply unit (11) being designed to be installed in the battery room (13) so that the battery packs (20) are laid in several layers on the floor (18) of the battery room (13) between its side walls (16, 17) and against the back wall (15), the battery packs (20) of the same layer being placed adjacent to each other and adjacent to one of their side walls (22-1, 22-2) so that the grooves (31) of these side walls (22-1, 22-2) face each other and so that the distal walls (24-2) of these packs (20) are adjacent to the back wall (15);
wherein the power supply unit (11) further comprises a fastening system according to any one of claims 1 to 8 for securing the battery packs (20) in the battery room (13).
